# EUROPEAN PATENT SPECIFICATION

(11) **EP 2 033 720 B1**
(45) Date of publication and mention of the grant of the patent: **29.02.2012**
(21) Application number: 08162889.3
(22) Date of filing: 25.08.2008
(51) Int. Cl.: B21B 31/07, B21B 31/08

(54) **Mechanical lock for rolling mill oil film bearing**
Mechanischer Verschluss für ein Walzwerk-Ölfilmlager
Verrou mécanique pour palier de film d'huile de laminoir

(30) Priority: 05.09.2007 US 969995 P; 18.08.2008 US 193081
(43) Date of publication of application: 11.03.2009
(73) Proprietor: Siemens Industry, Inc., Buffalo Grove, IL 60089 (US)
(72) Inventor: Bradshaw, Timothy J., North Grafton, MA 01536 (US); Martins, Armando S., Cumberland, RI 02864 (US)
(74) Representative: Maier, Daniel Oliver

(56) References cited:
- WO-A-03/022471
- US-A- 3 080 199
- US-B1- 6 415 489

## Description

### 1. Field of the Invention

This invention relates generally to rolling mill oil film bearings, and is concerned in particular with an improved mechanical lock for use in conjunction with the hydraulically actuated piston/cylinder assemblies employed to mount the bearings.

### 2. Description of the Prior Art

Oil film bearings are well known and widely employed throughout the rolling mill industry. Also known is the use of hydraulic piston/cylinder assemblies that are incorporated as integral components of the bearing assemblies, and that are used to urge the bearings onto the roll necks.

The document US-B1-6 415 489 discloses an oil film bearing according to the preamble of claim 1.

The present invention is concerned with the provision of an improved mechanical locking arrangement for use in concert with such piston/cylinder assemblies to insure that the bearings are securely mounted and remain securely anchored in their seated positions on the roll necks.

### SUMMARY OF THE INVENTION

In accordance with the present invention, an oil film bearing is provided for use on a rolling mill roll that has a tapered neck leading to a cylindrical extension, with a circular neck groove in the cylindrical extension axially deliminated by inboard and outboard shoulders. An internally tapered sleeve is received in a seated position on the tapered roll neck. The sleeve is journalled for rotation in a bushing fixed within a chock.

A piston surrounds the neck groove, and a cylinder surrounds and is internally subdivided by the piston into first and second chambers. Thrust components are interposed axially between the sleeve and the cylinder. Externally threaded locking arms are pivotally connected to the piston, and are adjustable between unlocked positions removed from the neck groove, and locked positions received in the neck groove and axially confined inwardly of the neck groove's outboard shoulder. A locknut is configured and dimensioned to be threaded onto the locking arms and into an engaged position retaining the locking arms in their locked positions within the neck groove. With the locknut in its engaged position, pressurization of the first cylinder chamber will result in the cylinder being urged axially in an inboard direction to exert a mounting force acting via the thrust components to urge the sleeve into its seated position, with outboard axial movement of the piston being resisted by engagement of the locking arms with the outboard shoulder of the neck groove.

Pressurization of the second cylinder chamber will serve to relieve the mounting force. The locking arms are externally configured with outboard partially cylindrical lands leading to threaded segments. When the locking arms are in their locked positions, the lands serve to guide the locknut into threaded engagement with the threaded locking arm segments. The locknut is rotationally fixed in its engaged position by means of a key received in a keyway in the roll neck. Preferably, spring loaded plungers are circumferentially spaced on the inboard side of the sleeve. The plungers serve to interact with the thrust components in generating the mounting force axially urging the sleeve into its seated position on the tapered section of the roll neck.

According to a preferred embodiment, pressurization of said second chamber will serve to relieve said mounting force.

According to another preferred embodiment said locking arms are externally configured with outboard partially cylindrical lands leading to threaded segments, said lands surfaces serving, when said locking arms are in their locked positions, to be received in and to guide said locknut into threaded engagement with said threaded segments.

Preferably, the oil film bearing further comprises means for rotationally fixing said locknut in its engaged position. In addition to this, the oil film bearing preferably is further so designed that said means for rotationally fixing said locknut comprises a key seated in a keyway in said rollneck, and means for connecting said key to said locking arms.

According to another preferred embodiment, said means for connecting said key to said locking arms also connects said key to said cylinder.

According to another preferred embodiment, said the oil film bearing further comprises spring loaded plungers circumferentially spaced on the inboard side of said sleeve, said plungers serving to interact with said thrust components in generating said mounting force to axially urge said sleeve into its seated position on the tapered section of said rollneck.

### BRIEF DESCRIPTION OF THE DRAWINGS

Figure 1 is a sectional view through an oil film bearing incorporating a mechanical lock in accordance with the present invention;
Figure 2 is a split end view taken on line A-A of Figure 1, the left hand side of which shows the locknut removed and the locking arm in its open position, and the right hand side of which shows the locknut threaded onto the closed locking arm;
Figures 3-5 are enlarged partial sectional views showing sequential steps in the engagement of the mechanical lock; and
Figure 6 is an enlarged partial sectional view showing the keyed interconnection between the piston and cylinder.

### DETAILED DESCRIPTION

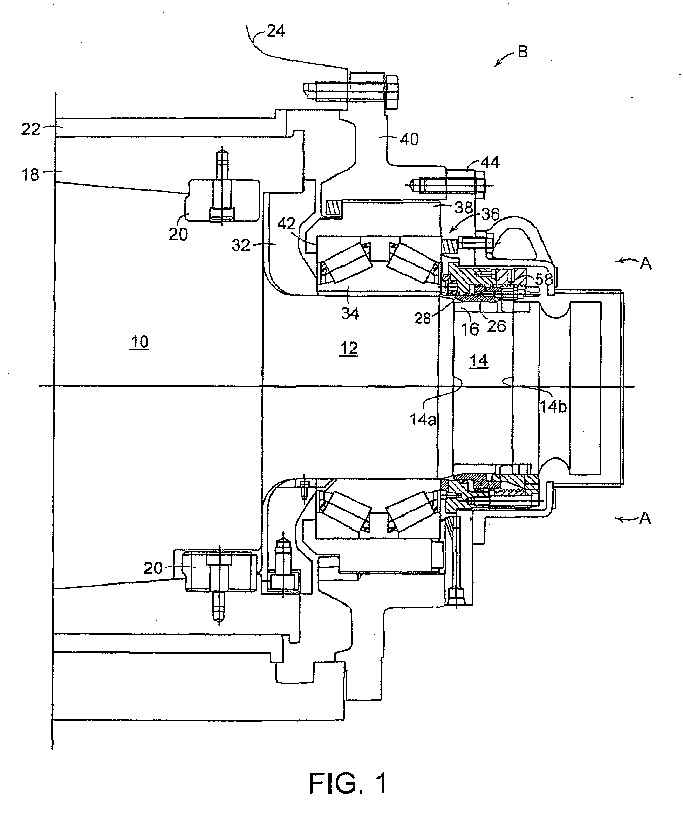

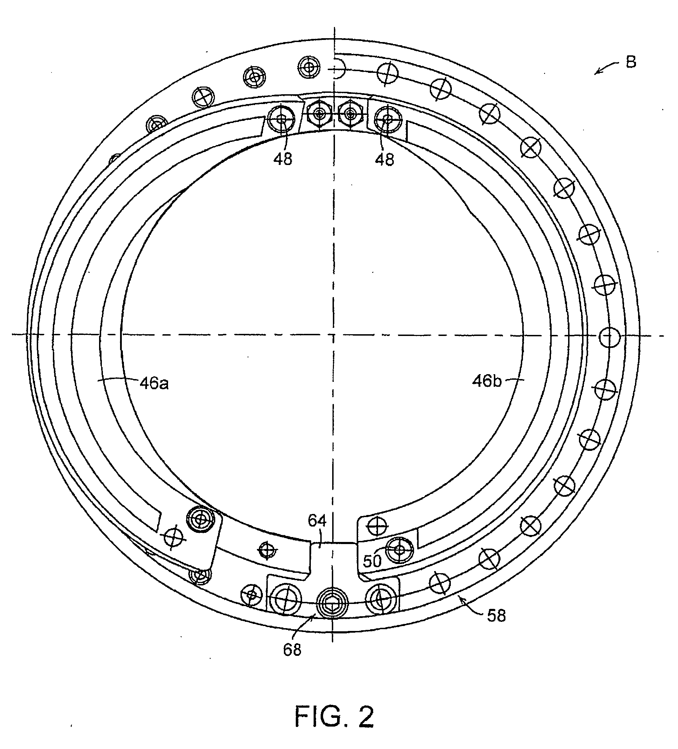

With reference initially to Figures 1 and 2, an oil film bearing "B" is shown for a rolling mill roll with a tapered neck 10 leading to a reduced diameter cylindrical end section 12. A groove 14 in the reduced diameter end section 12 is partially filled with a filler ring 16. The groove 14 is axially deliminated by inboard and outboard shoulders 14a, 14b. The oil film bearing B includes an internally tapered sleeve 18 seated on the tapered neck 10 and rotationally fixed in place by keys 20. The sleeve is journalled for rotation in a bushing 22 fixed within a chock 24, and in operation, a film of oil (not shown) is hydrodynamically maintained between the sleeve and bushing at the bearing load zone.

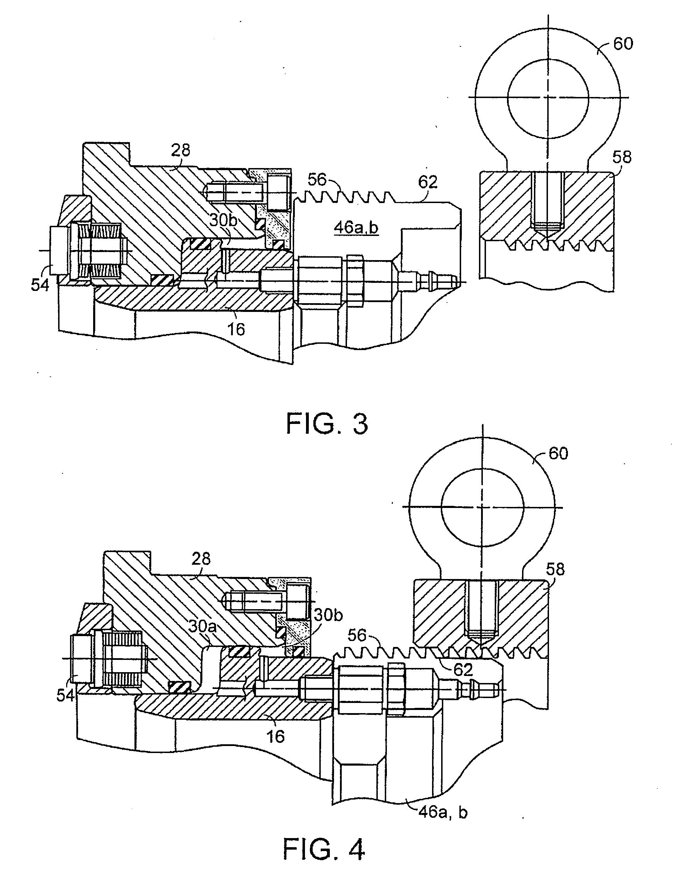

A piston 26 surrounds the groove 14, and a cylinder 28 surrounds the piston. As can best be seen by additional reference to Figures 3-5, the cylinder 28 is internally subdivided by the piston into first and second chambers 30a, 30b. Thrust components including a sleeve ring 32 and the inner race 34 of a roller thrust bearing 36 are interposed axially between the sleeve 18 and the cylinder 28. The roller thrust bearing has an outer retainer 38 surrounded by a collar 40 connected to the chock 24. The retainer overlaps the inboard end of the thrust bearing as at 42, and the outboard end of the thrust bearing is confined by an end plate 44 connected to the collar 40.

As can best be seen in Figure 2, locking arms 46a, 46b are pivotally connected as at 48 to the outboard end of the piston 16. Locking arm 46a is shown in an open condition removed from groove 14, whereas locking arm 46b is shown closed and seated in the groove. When closed, the locking arms 46a, 46b are confined axially by the outboard shoulder 14b of the groove 14 and radially by shoulder screws 50, one being shown in Figure 2.

Preferably, multiple circumferentially spaced spring loaded plungers 54 are carried by the inboard end of the cylinder 28. Hydraulically pressurizing chamber 30a urges the locking arms 46a, 46b against the adjacent outboard shoulder 14b of groove 14 while urging the cylinder 28 in the opposite direction. The cylinder will thus act via the plungers 54, the inboard race 34 of the thrust bearing 36 and the sleeve ring 32 to exert a mounting force urging the sleeve 18 into its seated position on the tapered neck section 10. Conversely, hydraulically pressurizing chamber 30b serves to relieve the mounting force.

The locking arms 46a, 46b are externally threaded as at 56 and are mechanically held in their closed positions seated in groove 14 by a lock nut 58 (shown in its locked position threaded onto the locking arms in Figures 1, 2, and 5).

The procedure for mounting the lock nut begins with the components arranged as shown in Figure 3, with the cylinder 28 retracted, the locking arms open, and the locknut 58 suspended by means (not shown) attached to a lifting eye bolt 60.

As shown in Figure 4, after the locking arms 46a, 46b have been closed and cylinder chamber 30a has been pressurized to advance the cylinder 28 and to axially urge the sleeve 18 onto the roll neck, as described previously, the lock nut 58 then is seated on unthreaded lands 62 projecting axially from the threaded sections of the locking arms.

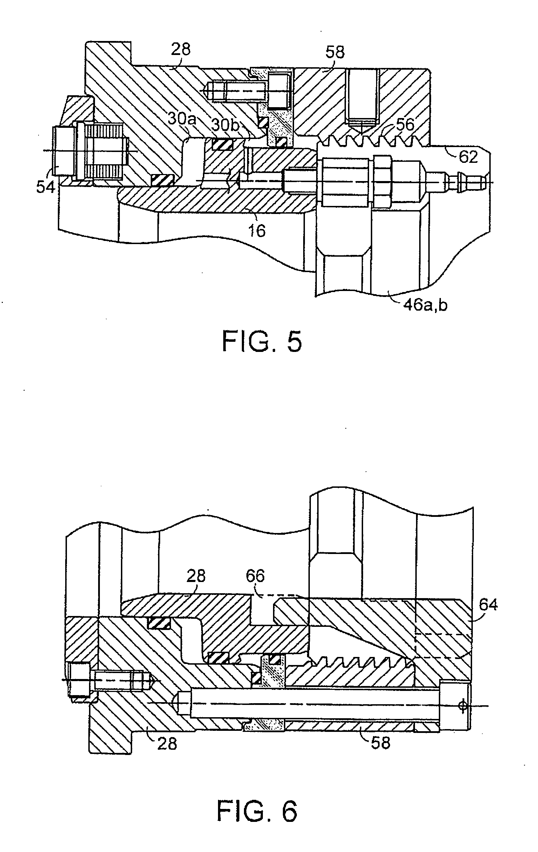

Then, as shown in Figure 5, the lock nut 58 is threaded onto the lock arms 46a, 46b and advanced to its locked position abutting the outboard end of the cylinder 28. Once this has been accomplished, and as shown in Figure 6, a key 64 is inserted in a keyway 66 in the piston 28, and the key is then connected to the cylinder 28 by a screw 68. This prevents relative rotation between the piston and cylinder.

Dismounting the bearing is accomplished by reversing the above described procedure. More particularly, the key 64 is initially removed, followed by pressurizing cylinder chamber 30b to relieve the mounting force. Thereafter, the lock nut 58 is removed and the locking arms 46a, 46b are opened, thus freeing the bearing for removal from the roll neck.

In light of the above, it will now be appreciated that the present invention embodies significant and advantageous features. Of prime importance is the secure retention of the locking arms 46a, 46b in the neck groove 14 by the locknut 58. Also of importance is the role of the unthreaded lands 62 which serve to guide and align the locknut for engagement with the threaded sections 56 of the locking arms.

## Claims

1. An oil film bearing (B) for a rolling mill roll having a tapered neck (10) leading to a cylindrical extension (12), with a circular groove (14) in said cylindrical extension axially deliminated by inboard and outboard shoulders (14a ,14b), said bearing comprising an internally tapered sleeve (18) received in a seated position on said tapered neck (10), said sleeve being journalled for rotation in a bushing (22) fixed within a chock (24) **characterised in that** said bearing further comprises:
a piston (26) surrounding the circular groove (14) in said cylindrical extension;
a cylinder (28) surrounding and internally subdivided by said piston (26) into first and second chambers (30a,30b);
thrust components (32,34) interposed axially between said sleeve and said cylinder;
externally threaded locking arms (46a,46b) pivotally connected to said piston, said locking arms being adjustable between unlocked positions removed from said circular groove (14), and locked positions received in said groove (14) and axially confined inwardly of said outboard shoulder (14b); and
a locknut (58) configured and dimensioned to be threaded onto said locking arms (46a,46b) and into an engaged position retaining said locking arms (46a,46b) in their locked positions within said groove (14), whereupon, with said locknut (58) in said engaged position, pressurization of said first chamber (30a) will result in said cylinder (28) being urged axially in an inboard direction to exert a mounting force acting via said thrust (32,34) components to urge said sleeve (18) into its seated position, with outboard axial movement of said piston (28) being resisted by engagement of said locking arms (46a,46b) with the outboard shoulder (14b) of said groove (14).

2. The oil film bearing of claim 1 wherein pressurization of said second chamber (30b) will serve to relieve said mounting force.

3. The oil film bearing of claims 1 or 2 wherein said locking arms (46a,46b) are externally configured with outboard partially cylindrical lands (62) leading to threaded segments (56), said lands surfaces serving, when said locking arms (46a,46b) are in their locked positions, to be received in and to guide said locknut (58) into threaded engagement with said threaded segments (56).

4. The oil film bearing of claims 1 or 2 further comprising means for rotationally fixing said locknut (58) in its engaged position.

5. The oil film bearing of claim 4 wherein said means for rotationally fixing said locknut comprises a key seated in a keyway in said rollneck, and means for connecting said key to said locking arms.

6. The oil film bearing of claim 5 wherein said means for connecting said key to said locking arms also connects said key to said cylinder.

7. The oil film bearing of claim 1 further comprising spring loaded plungers circumferentially spaced on the inboard side of said sleeve, said plungers serving to interact with said thrust components in generating said mounting force to axially urge said sleeve into its seated position on the tapered section of said rollneck.

## Patentansprüche

1. Ölfilmlager (B) für eine Walzwerkswalze, die einen konisch zulaufenden Zapfen (10) aufweist, der zu einer zylindrischen Verlängerung (12) führt, mit einer Ringnut (14) in der besagten zylindrischen Verlängerung, die axial durch einen innenliegenden und einen außenliegenden Ansatz (14a, 14b) begrenzt wird, wobei das besagte Lager eine innen konisch zulaufende Hülse (18) umfasst, die in einer aufsitzenden Position auf dem besagten konisch zulaufenden Zapfen (10) aufgenommen ist, wobei die besagte Hülse in einer Buchse (22) drehbar gelagert ist, die innerhalb eines Einbaustücks (24) befestigt ist, **dadurch gekennzeichnet, dass** das besagte Lager ferner Folgendes umfasst:
einen Kolben (26), der die Ringnut (14) in der besagten zylindrischen Verlängerung umgibt;
einen Zylinder (28), der den besagten Kolben (26) umgibt und von ihm in eine erste und eine zweite Kammer (30a, 30b) aufgeteilt wird;
Schubkomponenten (32, 34), die axial zwischen der besagten Hülse und dem besagten Zylinder angeordnet sind;
mit Außengewinden versehene Verriegelungsarme (46a, 46b), die schwenkbar mit dem besagten Kolben verbunden sind, wobei die besagten Verriegelungsarme zwischen entriegelten Positionen, in denen sie aus der besagten Ringnut (14) gelöst sind, und verriegelten Positionen, in denen sie in der besagten Nut (14) aufgenommen sind und axial auf den Bereich einwärts von dem besagten außenliegenden Ansatz (14b) begrenzt sind, verstellbar sind; und
eine Sicherungsmutter (58), die dafür ausgebildet und bemessen ist, auf die besagten Verriegelungsarme (46a, 46b) aufgeschraubt und in eine Eingriffsposition gedreht zu werden, in der die besagten Verriegelungsarme (46a, 46b) in ihren verriegelten Positionen innerhalb der besagten Nut (14) gehalten werden, wobei, wenn sich die besagte Sicherungsmutter (58) in der besagten Eingriffsposition befindet, eine Druckbeaufschlagung der besagten ersten Kammer (30a) zur Folge hat, dass der besagte Zylinder (28) axial in eine Einwärtsrichtung gedrückt wird, um eine Aufspannkraft auszuüben, die über die besagten Schubkomponenten (32, 34) bewirkt, dass die besagte Hülse (18) in ihre aufsitzende Position gedrückt wird, wobei einer nach außen gerichteten axialen Bewegung des besagten Kolbens (28) **dadurch** entgegengewirkt wird, dass die besagten Verriegelungsarme (46a, 46b) an dem außenliegenden Ansatz (14b) der besagten Nut (14) zur Anlage kommen.

2. Ölfilmlager nach Anspruch 1, wobei eine Druckbeaufschlagung der besagten zweiten Kammer (30b) bewirkt, dass die Wirkung der besagten Montagekraft aufgehoben wird.

3. Ölfilmlager nach Anspruch 1 oder 2, wobei die besagten Verriegelungsarme (46a, 46b) außen mit außenliegenden, teilweise zylindrischen Stegen (62) ausgebildet sind, die zu Gewindesegmenten (56) führen, wobei die besagten Stegflächen dazu dienen, wenn sich die besagten Verriegelungsarme (46a, 46b) in ihren verriegelten Positionen befinden, in der besagten Sicherungsmutter (58) aufgenommen zu werden und diese in Gewindeeingriff mit den besagten Gewindesegmenten (56) zu führen.

4. Ölfilmlager nach Anspruch 1 oder 2, welches ferner Mittel zur Drehfixierung der besagten Sicherungsmutter (58) in ihrer Eingriffsposition umfasst.

5. Ölfilmlager nach Anspruch 4, wobei die besagten Mittel zur Drehfixierung der besagten Sicherungsmutter einen Keil, der in einer Keilnut in dem besagten Walzenzapfen gelagert ist, und Mittel zum Verbinden des besagten Keils mit den besagten Verriegelungsarmen umfasst.

6. Ölfilmlager nach Anspruch 5, wobei die besagten Mittel zum Verbinden des besagten Keils mit den besagten Verriegelungsarmen auch den besagten Keil mit dem besagten Zylinder verbinden.

7. Ölfilmlager nach Anspruch 1, welches ferner federbeaufschlagte Stößel umfasst, die auf der innenliegenden Seite der besagten Hülse kreisförmig angeordnet sind, wobei die besagten Stößel dazu dienen, mit den besagten Schubkomponenten beim Erzeugen der besagten Aufspannkraft zusammenzuwirken, um die besagte Hülse axial in ihre aufsitzende Position auf dem konisch zulaufenden Abschnitt des besagten Walzenzapfens zu drücken.

## Revendications

1. Palier ( B ) à film d'huile pour un cylindre de laminoir, ayant un col ( 10 ) conique menant à un prolongement ( 12 ) cylindrique, ayant une rainure ( 14 ) circulaire dans le prolongement cylindrique, délimité axialement par des épaulements ( 14a, 14b ) intérieur et extérieur, le palier comprenant un manchon ( 18 ) conique intérieurement, reçu dans une position calée sur le col (10) conique, le manchon étant tourillonné en rotation dans un fourreau ( 22 ) fixé dans une empoise ( 24 ), **caractérisé en ce que** le palier comprend, en outre :
un piston ( 26 ) entourant la rainure ( 14 ) circulaire du prolongement cylindrique ;
un cylindre ( 28 ) entourant le piston ( 26 ) et subdivisé intérieurement par le piston ( 26 ) en des première et deuxième chambres ( 30a, 30b ) ;
des éléments ( 32, 34 ) de poussée interposés axialement entre le manchon et le cylindre ;
des bras ( 46a, 46b ) de verrouillage filetés extérieurement, reliés à pivotement au piston, les bras de verrouillage étant réglables entre des positions déverrouillées éloignées de la rainure ( 14 ) circulaire et des positions verrouillées reçues dans la rainure ( 14 ) et étant confinés axialement vers l'intérieur de l'épaulement ( 14b ) extérieur ; et
un contre-écrou ( 58 ) configuré et dimensionné pour être vissé sur les bras ( 46a, 46b ) de verrouillage et dans une position serrée retenant les bras ( 46a, 46b ) de verrouillage dans leurs positions verrouillées dans la rainure ( 14 ), dans lequel, alors que le contre-écrou ( 58 ) est en position serrée, une mise sous pression de la première chambre ( 30a ) fera que le cylindre ( 28 ) sera repoussé axialement dans une direction vers l'intérieur, pour appliquer une force de montage agissant par l'intermédiaire d'éléments de poussée ( 32, 34 ), pour repousser le manchon (18) dans sa position calée, un déplacement axial vers l'extérieur du piston ( 28 ) étant empêché par la coopération des bras ( 46a, 46b ) de verrouillage avec l'épaulement ( 14b ) extérieur de la rainure ( 14 ).

2. Palier à film d'huile suivant la revendication 1, dans lequel la mise sous pression de la deuxième chambre ( 32 ) servira à soulager la force de montage.

3. Palier à film d'huile suivant les revendications 1 ou 2, dans lequel les bras ( 46a, 46b ) de verrouillage sont configurés extérieurement, en ayant des parties ( 62 ) cylindriques partiellement à l'extérieur menant à des segments ( 56 ) filetés, les surfaces des parties servant, lorsque les bras ( 46a, 46b ) de verrouillage sont dans leurs positions verrouillées, à être reçues dans le contre-écrou ( 58 ) et le guider en coopération de vissage avec les segments ( 56 ) filetés.

4. Palier à film d'huile suivant les revendications 1 ou 2, comprenant, en outre, des moyens pour immobiliser en rotation le contre-écrou ( 58 ) dans sa position serrée.

5. Palier à film d'huile suivant la revendication 4, dans lequel les moyens d'immobilisation en rotation du contre-écrou comprennent une clavette bloquée dans un logement de clavette du col du cylindre et des moyens pour relier la clavette aux bras de verrouillage.

6. Palier à film d'huile suivant la revendication 5, dans lequel les moyens pour relier la clavette aux bras de verrouillage relient aussi la clavette au cylindre.

7. Palier à film d'huile suivant la revendication 1, comprenant, en outre, des plongeurs soumis à l'action de ressort à distance circonférentiellement du côté vers l'intérieur du manchon, les plongeurs servant à coopérer avec les éléments de poussée, pour produire la force de montage, pour repousser axialement le manchon en le faisant venir dans sa position calée sur la section conique du col du cylindre.
